# EUROPEAN PATENT SPECIFICATION

(11) **EP 3 050 448 B1**
(45) Date of publication and mention of the grant of the patent: **16.08.2017**
(21) Application number: 16275015.2
(22) Date of filing: 28.01.2016
(51) Int. Cl.: A41D 31/00, A41D 13/05

(54) **BODY PROTECTOR LAMINATE**
KÖRPERPROTEKTORLAMINAT
STRATIFIÉ DE PROTECTION CORPORELLE

(30) Priority: 02.02.2015 GB 201501657
(43) Date of publication of application: 03.08.2016
(73) Proprietor: Pembroke Bow Limited, Mickle Trafford Chester CH2 4QH (GB)
(72) Inventor: BUREK, Roy, Chester, CH4 7BS (GB); CARR-SEAMAN, Lucy Elizabeth, Northumberland NE45 5PL (GB)
(74) Representative: Games, Robert Harland

(56) References cited:
- FR-A1- 2 797 153
- GB-A- 2 385 256
- US-A- 4 272 850
- US-A1- 2013 025 035
- US-B1- 6 519 781

## Description

The present invention relates to a body protector laminate.

### BACKGROUND TO THE INVENTION

Equestrian body protectors are recognised as being important for the safety of riders, both on and off a horse, protecting the torso from injury, such as to the ribs or vital organs. A body protector provides static support for the body and absorbs energy from impacts caused by falling off a horse, being stood on by a horse and being kicked by a horse, reducing the severity of any injury sustained.

The first body protectors were made from relatively thick foam encased in a loose fabric casing, and were a poor fit around the body. They were relatively cumbersome and inhibited movement to a degree, which was somewhat detrimental to competitors in sports involving horses. A modem body protector contains materials which soften slightly when warmed by body heat (i.e. when worn) to improve fit.

It has also become well known to cut the foam into small blocks, which are stitched into pockets. Limited improved flexibility is provided at the joins between the pockets. However, the improvement in flexibility is offset by the problem of having to stitch and fill large numbers of pockets, which is expensive and time consuming. Furthermore, the foam is interrupted at the pocket boundaries, and does not form a complete protective layer. Therefore, the protector is compromised at the joints and is vulnerable in testing and use to failure at a contact point on a pocket seam, i.e. to a point impact at a position where there is no foam. GB 2 385 256 discloses a body protector with two foam panels, which have cut outs for improved flexibility. The panels are enclosed between layers of textile material.

US 4,272,850 discloses a body protective pad with a scored top surface for increased flexibility. The pad is enclosed within an outer elasticized cloth wrapping. It is an object of the present invention to reduce or substantially obviate the aforementioned problems.

### STATEMENT OF INVENTION

According to a first aspect of the present invention, there is provided a body protector laminate comprising a first laminated layer having first and second skins of fabric bonded to either side of a first inner foam core, one or more cuts being provided through the first skin and through the inner foam core, and one or more further cuts being provided through the second skin and through the inner foam core, enabling compound bending of the laminate for substantially fitting to or against a body having convex and concave surfaces.

A second laminated layer may be disposed against the first laminated layer, the second laminated layer comprising third and fourth skins of fabric bonded to either side of a second inner foam core, one or more cuts being provided through the third skin and through the second inner foam core, and one or more further cuts being provided through the fourth skin and through the second inner foam core, enabling compound bending, the first and second laminated layers being in contact with and able to slide against one another.

A laminate with two adjacent laminated layers provides greater protection than just a single layer, because the cuts in the two laminated layers tend not to align with one another when the laminates are curved, because the thickness of the inner laminated layer reduces curvature of the outer laminated layer, thus displacing the position of the cuts in the second layer relative to those in the first layer. This provides substantially complete protection from a sharp object intruding through the body protector laminate, whether at the front, back or side, because the object will always engage at least one inner foam core.

The two adjacent skins of the laminated layers are able to slide past one another easily as there is minimal friction between them, each skin being formed from (or incorporating) a low-friction material. As the skins move relative to one another by sliding along a slip plane (or slip surface) between them, no significant resistance to flexing or compound bending is provided, hence movement is not inhibited by laminates sliding past one another.

One or more additional laminated layers may be disposed against the second laminated layer, each additional laminated layer comprising first and second additional skins of fabric bonded to either side of an additional inner foam core, one or more cuts being provided through the first additional skin and through the additional inner foam core, and one or more further cuts being provided through the second additional skin and through the additional inner foam core, enabling compound bending of the laminate for substantially fitting to or against a body having convex and concave surfaces, the first, second and additional laminated layers being in contact with and able to slide against adjacent laminated layers. There may be two additional laminated layers disposed against the second laminated layer. Overall, these two additional layers would be the third and fourth laminated layers in the body protector laminate.

The use of multiple laminated layers further improves body protection without substantially increasing the overall weight of the body protector laminate, as progressively thinner layers can be used. Where multiple laminated layers are used, the cuts in one laminated layer will overlap an uncut foam area of another laminated layer, and vice versa. The layers can slide and flex relative to one another, providing the flexibility needed for movement when worn without compromising on protection. Body movement can cause one layer to flex, conforming to the body, subsequently leading to that layer sliding against its neighbouring layer(s) along one or more slip planes as described above. The low friction between different laminated layers scales to a body protector laminate having three or more sequential laminated layers. There is no significant increase in cumulative friction from all slip planes present, ensuring that increased impact protection from more than two laminated layers is not compromised by reduced flexibility.

The or each cut in each laminated layer may extend at least halfway through the inner foam core of that layer. The or each further cut in each laminated layer may extend at least halfway through the inner foam core of that layer.

Advantageously, this allows the laminate to be flexible when curved. Instead of placing the curved surface in tension immediately, the skin portion on one side of a cut can move away from the skin portion on the other side of the cut or further cut. This improves the degree to which the laminate can curve to fit a body. The farther each cut extends from one fabric skin towards the opposing fabric skin, i.e. the farthest edge of its inner foam core, the more flexible the laminate.

For the or each laminated layer, the cuts through the respective opposing sides of each laminated layer may include a first series of cuts each running parallel to one another, and a second series of cuts each running parallel to one another. Each cut of the first series may intersect one or more cuts of the second series at an angle. Preferably, the angle between the first and second series of intersecting cuts is between 30 and 90 degrees.

For the or each laminated layer, the further cuts through the respective opposing sides of each laminated layer may include a first series of further cuts each running parallel to one another, and a second series of further cuts each running parallel to one another. Each further cut of the first series may intersect one or more further cuts of the second series at an angle. Preferably, the angle between the first and second series of intersecting further cuts is between 30 and 90 degrees.

This creates a set of foam islands on one or both sides of the laminated layer, each island being isolated from the rest by the cuts which form a criss-crossed grid, the surface of each foam island being diamond-shaped. The islands are able to flex relative to one another, improving its two-dimensional flexibility for convex or concave flexing relative to a body. The angle at which two cuts intersect affects the shapes of and relative flexibility between neighbouring foam islands, with the flexibility being most directionally-dependent for angles around 30° and least directionally-dependent for angles around 90°.

The cuts through the respective opposing sides of each laminated layer may include a third series of cuts each running parallel to one another. Each cut in the third series of cuts may substantially bisect a series of collinear intersections of the first and second series of cuts to reduce the diamond-shaped foam islands to triangular-shaped foam islands.

The further cuts through the respective opposing sides of each laminated layer may include a third series of further cuts each running parallel to one another. Each further cut in the third series of further cuts may substantially bisect a series of collinear intersections of the first and second series of further cuts to reduce the diamond-shaped foam islands to triangular-shaped foam islands.

This further improves the degree to which the laminate can curve vertically or horizontally around a body, providing a better fit to convex and concave surfaces of that body. Intersecting the other series of cuts at existing intersections ensures a symmetrical distribution of protection, without creating any weaker areas of small foam pocket size, and also increases flexibility at the intersections themselves.

A given pair of adjacent cuts running parallel through the same side of a given laminated layer may be separated by twenty millimetres. The separation between adjacent cuts may be greater or less than twenty millimetres, and may be optimised for specific materials.

A given pair of adjacent further cuts running parallel through the same side of a given laminated layer may be separated by twenty millimetres. The separation between adjacent further cuts may be greater or less than twenty millimetres, and may be optimised for specific materials.

This provides enough distance between cuts through the same skin to allow a parallel further cut (or cut) to be interposed on the opposing skin between the given pair, without compromising the overall structural integrity of the laminated layer.

A given series of parallel cuts may be offset from and run parallel to a corresponding series of parallel further cuts. For example, the first series of parallel cuts may be offset from and run parallel to the second series of parallel further cuts. The second series of parallel cuts may be offset from and run parallel to the second series of parallel further cuts.

Consequently, neither series of parallel cuts or further cuts lie substantially opposite one another, thus preventing the cuts from completely dividing or penetrating the laminated layer along any individual line. The laminated layer can therefore also repeatedly flex on both sides in any direction without significant detriment to its structural integrity.

In the or each laminated layer, a given cut through one skin may be adjacent to and parallel with a given further cut through the opposing skin (that is, the other skin of the same laminated layer). For example, a given cut through the first skin may be adjacent to and parallel with a given further cut through the second skin. A given cut through the third skin may be adjacent to and parallel with a given further cut through the fourth skin. The given cut may be separated from the given further cut by a distance of substantially at least ten millimetres.

The minimum distance of 10 mm between opposing cuts reduces the likelihood of the cuts and further cuts merging due to wear from over-flexing, or under stress (tearing due to an impact with an object), whilst being close enough to enhance flexibility between the sections defined by the various cuts and further cuts.

Each skin may include polyester or nylon. Each skin may be substantially thinner than its associated inner foam core.

Polyester and nylon are both strong and lightweight, being resistant to tears, and easily cleaned if they become dirty. Only a thin layer (skin) is needed on either side to protect the associated inner foam core from degradation, also allowing that inner foam core to dry quickly if wet. Polyester and nylon can also be woven to add elasticity to the skins. Both polyester and nylon are low-friction materials, and can be laminated successfully and permanently to the inner foam core. This allows the layers of laminate to slide against one another with minimal resistance due to friction, and confers durability to the body protector laminate.

Each inner foam core may be substantially up to twenty-five millimetres in depth. Each inner foam core may be substantially up to twelve millimetres in depth. Each inner foam core may be substantiallyup to six millimetres in depth.

Where one laminated layer is present in the body protector laminate, it is preferable to use a thicker inner foam core of 25 mm thickness to provide sufficient protection from impacts. Where more than one laminated layer is used, progressively thinner inner foam cores, of 12 mm or 6 mm thickness for two or four laminated layers respectively, can provide equivalent or superior protection relative to a single layer. The overall weight and bulk of a multi-layered body protector laminate remains similar to that provided by a laminate with a single foam layer.

The inner foam core may include one or more of the following: PVC nitrile, polyethylene, polypropylene, polyester.

These materials, particularly polyethylene and polypropylene, can be formed as expanded foams, having minimal weight whilst being capable of absorbing large external forces, dissipating the energy of an impact. PVC nitrile may also be thermo-responsive and become more flexible around body temperature. A combination of materials will confer the benefits of each.

The or each laminated layer may have a plurality of apertures running therethrough. Preferably, each aperture may be substantially ten millimetres in diameter.

The apertures increase the breathability of the or each laminated layer, facilitating air circulation through the whole body protector laminate. An aperture size of 10 mm is a beneficial compromise between improving the comfort of the wearer with regard to breathability and preventing substantial intrusion of an object therethrough.

Each aperture may be intersected by at least one cut and/or further cut. In other words, each aperture may be located along a cut and/or further cut. Preferably, each aperture may be located at an intersection between at least two cuts or further cuts.

Locating each aperture along a cut allows each foam pocket to remain intact, preserving their structural integrity in case of an impact. Locating each aperture at an intersection between two cuts (or further cuts) improves the flexibility of the laminate at each intersection, increasing the degree to which each laminated layer can flex.

According to a second aspect of the present invention, there is provided a body protector comprising a front body panel, a rear body panel, and straps connecting the front and rear body panels, where each body panel includes at least one body protector laminate in accordance with the first aspect of the invention.

The body protector is suitable to be worn as a vest when riding horses, including front and rear laminates to cushion a fall and prevent sharp objects from penetrating the protector and causing serious injury to the torso. The straps allow for the body protector to be adjusted without the need for a custom fit, sitting across the shoulders to allow the body protector laminates to rest against the torso.

There may be side body panels connected to the front and/or rear body panels, and each side body panel may include at least one body protector laminate. Side straps may also be provided for adjusting the fit of the body protector at the wearer's sides.

The side body panels further increase the protection offered by the body protector by preventing a sharp object from injuring a person through one of the sides of their torso, if an accident occurs where a rider falls on their side. Force is also distributed through the layers thus reducing the likelihood of injury.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a perspective view through a cross-section of a portion of a first embodiment of a body protector laminate having one laminated layer;
Figure 2 shows a plan view of a portion of the body protector laminate of Figure 1;
Figure 3 shows a cross-sectional side view of a portion of the body protector laminate of Figure 1;
Figure 4 shows a cross-sectional side view of a portion of a second embodiment of a body protector laminate having two laminated layers, arranged horizontally;
Figure 5 shows a cross-sectional side view of a portion of a third embodiment of a body protector laminate arranged vertically in a compound bend; and
Figure 6 shows a cross-sectional side view of a portion of the body protector laminate of Figure 1 draped vertically in proximity to a schematic of the back of a human body.

### DESCRIPTION OF PREFERRED EMBODIMENTS

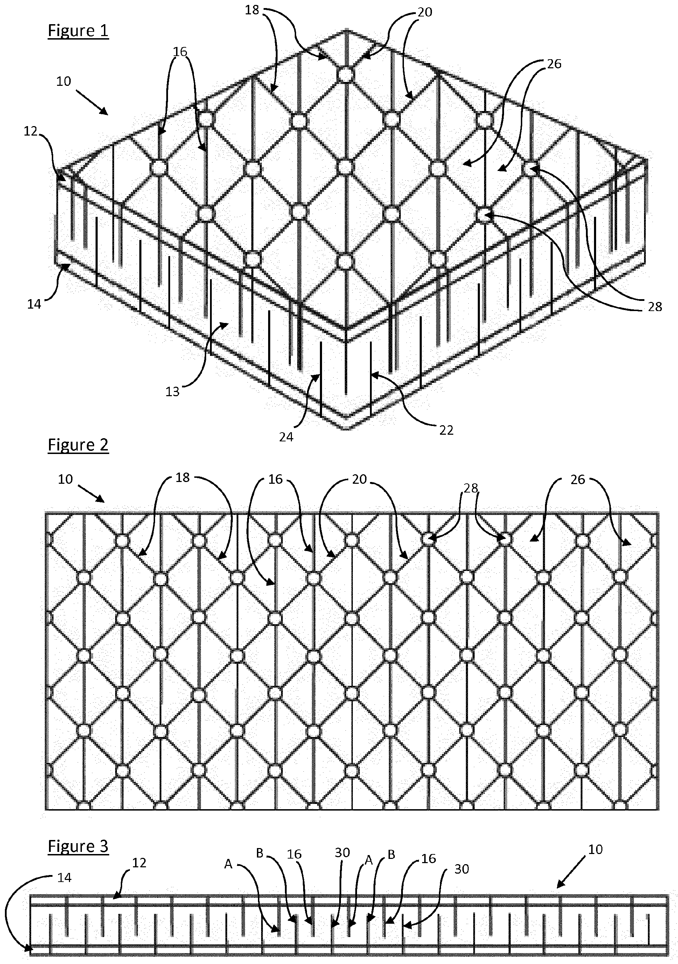

Referring firstly to Figures 1 to 3, a first embodiment of a body protector laminate is indicated generally at 10. The body protector laminate 10 includes a first laminated layer having a first fabric skin 12 and a second fabric skin 14. The fabric skins 12, 14 are bonded onto either side of an inner foam core 13. The inner foam core is optionally 25 mm thick, but can be in the range of 6 mm to 30 mm in thickness. The fabric skins 12, 14 are woven from polyester and nylon, and protect the inner foam core 13 from damage, as well as being durable outer surfaces. The fabric skins 12, 14 are substantially thinner than the inner foam core 13, and are sufficiently porous to allow the inner foam core 13 to dry quickly if it has become wet. The inner foam core 13 is made from PVC nitrile. However, it is envisaged that further embodiments may include polyethylene (or expanded polyethylene), polypropylene (or expanded polypropylene), polyester (or expanded polyester), or any combination thereof.

The first fabric skin 12 has three series of parallel cuts running through its surface, penetrating through around 75% of the inner foam core 13. A first series of parallel cuts 16 runs vertically through the laminated layer as seen in Figure 2. The first series of cuts 16 is crossed obliquely at 45° by a second series of parallel cuts 18, running from the top-left to bottom-right in Figure 2. At existing intersections between cuts in the first and second series 16, 18, the first series of parallel cuts 16 is also crossed obliquely at 45° by a third series of parallel cuts 20 running from the top-right to bottom-left in Figure 2. This provides multi-directional flexibility in the body protector laminate, allowing it to curve around the contours of a body without the need for a custom fit. Adjacent cuts in the same series are distanced from each other by 20 mm in this embodiment. Only selected cuts are labelled for clarity.

Collectively, the three series of cuts 16, 18, 20 form a first lattice that divides one side of the laminated layer into triangular foam islands 26. The foam islands 26 are able to flex relative to one another with lower resistance than an equivalent uncut body protector laminate, making it more flexible and comfortable to wear as part of a body protector.

There is a series of apertures 28 located at each intersection between cuts from the first, second and third series. The apertures 28 run through the first fabric skin 12, the inner foam core 13, and the second skin 14. The apertures 28 are 10 mm in diameter and improve ventilation and cooling when the body protector laminate is worn against a body. The apertures 28 are substantially circular. It is possible that the aperture diameter could be substantially as low as 5 mm, or as large as 13 mm, to meet with exact safety requirements. The aperture size can be optimised to the materials. A range of aperture sizes may be used in a single laminate. The apertures also reduce the overall weight of the body protector laminate, and increase flexibility at each intersection without decreasing protection from impacts.

The second skin 14 has three series of parallel further cuts running through its surface, in a similar manner to that described previously for the first fabric skin 12. In this case, the first, second and third series of parallel further cuts 22, 24, 30 correspond to the descriptions of the first, second and third series of cuts 16, 18, 20 respectively. This forms a second lattice which divides the other side of the laminated layer into triangular foam islands (not visible). The second lattice is displaced relative to the first lattice to ensure that the 'further cuts' intersect 'cuts' to a minimal extent. The second lattice may also be rotationally offset from the first lattice for the same reason.

Figure 3 shows the cuts through the first fabric skin 12 alternate with the cuts through the second skin 14 regularly. Another way of describing this would be 'continuous double-sided cuts', or, given the regular alternation, a syndiotactic distribution of cuts. The particular cross-section of Figure 3 omits apertures for clarity. The cross-section is otherwise representative of the pattern of cuts viewed along a plane taken through a set of collinear apertures running horizontally across the portion of the body protector laminate 10 in Figure 1. As such, certain cuts converge at the plane of the cross-section, and are not distinct from one another in Figure 3. In this case, intersecting cuts 16, 18, 20 through the first fabric skin 12 are represented at A, with intersecting further cuts 22, 24 represented at B displaced to one side of A.

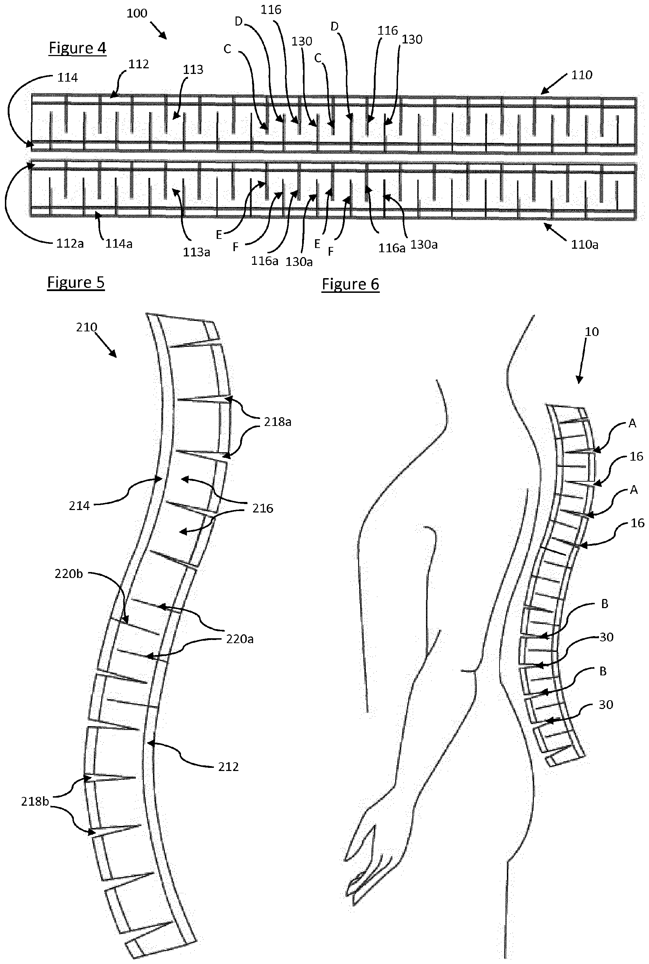

Figure 4 shows a body protector laminate, indicated generally at 100. The body protector laminate 100 has a first laminated layer 110 and a second laminated layer 110a adjacent to one another. The reference numerals of Figure 4 are comparable to the reference numerals in Figure 3, with an equivalent description obtained by increasing the reference numerals of Figure 3 by one hundred (and appending 'a' in the case of the second laminated layer), C and E being equivalents of A, and D and F being equivalents of B. The same caveats regarding the cross-section taken, such as the omission of apertures and the convergence of cuts, also apply.

In use, the two laminated layers are in contact with one another via a second fabric skin 114 and a first fabric skin 112a, without a gap between them, but they are shown as separated in Figure 4 for clarity. Each inner foam core 113, 113a is 10 mm thick. Each fabric skin has a low coefficient of friction, and so there is minimal resistance to the laminated layers 110, 110a moving relative to each other along a slip plane between the fabric skins 114, 112a. This permits relatively free movement of a person wearing the body protector laminate, as it can freely flex and conform to changes in the surface contours of their torso as they move.

Figure 5 illustrates the effect of cuts through a portion of a body protector laminate 210. The laminate 210 has first and second fabric skins 212, 214 with a series of cuts through the surface of each spaced along the laminate 210. In this case, the cuts are not distributed in a regular alternating manner, with an upper third of the laminate 210 having cuts only through the first fabric skin 212, and a lower third of the laminate 210 having cuts only through the second fabric skin 214. The middle third has cuts through both fabric skins 212, 214, alternating between sides. One way of describing this would be 'non-continuous double-sided cuts'. This retains the majority of the desired flexibility in the laminate 210 whilst reducing the number of cuts required, increasing protection.

The laminate 210 has foam islands 216 delineated by cuts 218a, 218b through the first and second fabric skins 212, 214 respectively. Figure 5 shows that the foam islands 216 become separate when an external force (such as gravity) imparts curvature to the laminate 210, with non-stressed cuts 220a, 220b remaining closed. By way of an analogy, it could be considered that each foam island 216 represents a vertebra in a spine. The body protector laminate 210 can flex in two dimensions, one of these dimensions being shown by the 'wave' in the laminate 210, and the other being along the plane of the cross-section of Figure 5.

Figure 6 aligns the body protector laminate 10 with a back of a human body, mirroring the curvature of the spine. Selected examples of the cuts (or combinations of cuts) from Figure 3 are indicated at A, 16, B, and 30, following the same pattern of alternation as in Figure 3. It is envisaged that a body protector laminate as part of a body protector would conform to the shape of a torso when worn, using straps and/or elastic fabric to wear the body protector and hold it in close proximity to the torso on all sides. A zip fastener may be provided to the front of the body protector.

An embodiment of a body protector utilising one or more body protector laminates as panels is envisaged. The body protector includes a front panel, a rear panel, two side panels, and shoulder straps to wear and secure the body protector. Each side panel is formed integrally with the rear panel, extending laterally and capable of engaging with the front panel. The side panels may be formed integrally with either of the front or rear panels and engageable with the opposing panel. One or more clips, buckles or similar attachment means may engage each side panel to the front or rear panels. Each type of panel includes two laminated layers with 10 mm cores of the type described previously. The two laminated layers can flex together when manipulated, moving sympathetically, as they are substantially flexible in the dimensions of their planes.

In use, the lattices in each side of the layer do not align substantially, so penetration of a sharp object on impact through any external part, including a cut, of the outermost laminated layer will not continue to substantially penetrate through another cut in the innermost laminated layer without meeting a foam island. This increases the overall protection conferred by a body protector with multiple laminated layers over that provided by a single layer of laminate, whilst maintaining flexibility in the protector.

Other embodiments are also envisaged within the scope of the claims. In one embodiment, the body protector has four laminated layers, each being 6 mm thick. In other embodiments, the angles of intersection between different series of cuts and the frequency of cuts in each series result in different rhombic or triangular patterns, providing more directionally-dependent flexibility.

The embodiments described above are provided by way of example only, and various changes and modifications will be apparent to persons skilled in the art without departing from the scope of the present invention as defined by the appended claims.

## Claims

1. A body protector laminate (10) comprising a first laminated layer having first (12) and second (14) skins of fabric bonded to either side of a first inner foam core (13), one or more cuts (16, 18, 20) being provided through the first skin (12) and through the first inner foam core (13), and one or more further cuts (22, 24, 30) being provided through the second skin (14) and through the first inner foam core (13), enabling compound bending of the laminate (10) for substantially fitting to or against a body having convex and concave surfaces.

2. A body protector laminate as claimed in claim 1, in which a second laminated layer is disposed against the first laminated layer, the second laminated layer comprising third and fourth skins of fabric bonded to either side of a second inner foam core, one or more cuts being provided through the third skin and through the second inner foam core, and one or more further cuts being provided through the fourth skin and through the second inner foam core, enabling compound bending, the first and second laminated layers being in contact with and able to slide against one another.

3. A body protector laminate as claimed in claim 2, in which one or more additional laminated layers are disposed against the second laminated layer, each additional laminated layer comprising first and second additional skins of fabric bonded to either side of an additional inner foam core, one or more cuts being provided through the first additional skin and through the additional inner foam core, and one or more further cuts being provided through the second additional skin and through the additional inner foam core, enabling compound bending, the first, second and additional laminated layers being in contact with and able to slide against adjacent laminated layers.

4. A body protector laminate as claimed in any of claims 1 to 3, in which, for the or each laminated layer, the one or more cuts and/or the one or more further cuts extend at least halfway through the relevant inner foam core.

5. A body protector laminate as claimed in any of claims 1 to 4, in which, for the or each laminated layer, the one or more cuts include a first series of cuts each running parallel to one another, and a second series of cuts each running parallel to one another, with each cut of the first series intersecting one or more cuts of the second series at an angle.

6. A body protector laminate as claimed in claim 5, in which the one or more cuts include a third series of cuts each running parallel to one another, with each cut in the third series of cuts substantially bisecting a series of collinear intersections of the first and second series of cuts.

7. A body protector laminate as claimed in any preceding claim, in which, for the or each laminated layer, the one or more further cuts include a first series of further cuts each running parallel to one another, and a second series of further cuts each running parallel to one another, with each further cut of the first series intersecting one or more further cuts of the second series at an angle.

8. A body protector laminate as claimed in claim 7, in which the one or more further cuts include a third series of further cuts each running parallel to one another, with each cut in the third series of further cuts substantially bisecting a series of collinear intersections of the first and second series of further cuts.

9. A body protector laminate as claimed in claim 7 or claim 8, when dependent on claim 5 or claim 6, in which a given pair of adjacent cuts or further cuts running parallel through the same side of a given laminated layer are separated by a distance of substantially at least twenty millimetres.

10. A body protector laminate as claimed in any of claims 7 to 9, when dependent on claim 5 or claim 6, in which a given series of parallel cuts is offset from and runs parallel to a corresponding series of parallel further cuts.

11. A body protector laminate as claimed in any preceding claim, in which a given cut through one skin of a given laminated layer is adjacent to and parallel with a given further cut through the other skin of the same laminated layer, the given cut being separated from the given further cut by a distance of substantially at least ten millimetres.

12. A body protector laminate as claimed in any preceding claim, in which one or more of the following have a plurality of apertures running therethrough: the first laminated layer, the second laminated layer, one or more of the additional laminated layers.

13. A body protector laminate as claimed in claim 12, in which each aperture is intersected by at least one cut and/or further cut.

14. A body protector comprising a front body panel, a rear body panel, and straps connecting the front and rear body panels, where each body panel includes at least one body protector laminate as claimed in any of claims 1 to 13.

15. A body protector as claimed in claim 14, in which there are side body panels connected to the front and rear body panels, each side body panel including at least one body protector laminate as claimed in any of claims 1 to 13.

## Patentansprüche

1. Körperprotektorlaminat (10), das eine erste laminierte Schicht, die erste (12) und zweite (14) Häute aus Gewebe aufweist, die mit jeder Seite eines ersten inneren Schaumkerns (13) verbunden sind, einen oder mehrere Schnitte (16, 18, 20), die durch die erste Haut (12) und durch den ersten inneren Schaumkern (13) bereitgestellt sind, und einen oder mehrere weitere Schnitte (22, 24, 30) umfasst, die durch die zweite Haut (14) und durch den ersten inneren Schaumkern (13) bereitgestellt sind, wodurch das verbundene Biegen des Laminats (10) ermöglicht wird, um es im Wesentlichen an oder gegen einen Körper anzupassen, der konvexe oder konkave Flächen aufweist.

2. Körperprotektorlaminat nach Anspruch 1, wobei eine zweite laminierte Schicht gegen die erste laminierte Schicht angeordnet ist, die zweite laminierte Schicht dritte und vierte Häute aus Gewebe umfasst, die mit jeder Seite eines zweiten inneren Schaumkerns verbunden sind, wobei ein oder mehrere Schnitte durch die dritte Haut und durch den zweiten inneren Schaumkern bereitgestellt sind, und ein oder mehrere weitere Schnitte durch die vierte Haut und durch den zweiten inneren Schaumkern bereitgestellt sind, wodurch das verbundene Biegen ermöglicht wird, wobei die ersten und zweiten laminierten Schichten miteinander in Berührung sind und in der Lage sind, sich gegeneinander zu verschieben.

3. Körperprotektorlaminat nach Anspruch 2, wobei eine oder mehrere zusätzliche laminierte Schichten gegen die zweite laminierte Schicht angeordnet ist/sind, jede zusätzliche laminierte Schicht erste und zweite zusätzliche Häute aus Gewebe umfasst, die auf jeder Seite eines zusätzlichen inneren Schaumkerns verbunden sind, wobei ein oder mehrere Schnitte durch die erste zusätzliche Haut und durch den zusätzlichen inneren Schaumkern bereitgestellt sind, und ein oder mehrere weitere Schnitte durch die zweite zusätzliche Haut und durch den zusätzlichen inneren Schaumkern bereitgestellt sind, wodurch das verbundene Biegen ermöglicht wird, wobei die ersten, zweiten und zusätzlichen laminierten Schichten mit benachbarten laminierten Schichten in Berührung sind und in der Lage sind, sich gegen sie zu verschieben.

4. Körperprotektorlaminat nach einem der Ansprüche 1 bis 3, wobei für die oder jede laminierte Schicht der eine oder die mehreren Schnitte und/oder der eine oder die mehreren weiteren Schnitte sich zumindest über die halbe Strecke durch den entsprechenden inneren Schaumkern erstrecken.

5. Körperprotektorlaminat nach einem der Ansprüche 1 bis 4, wobei für die oder jede laminierte Schicht der eine oder die mehreren Schnitte eine erste Reihe von Schnitten, die jeweils parallel zueinander verlaufen, und eine zweite Reihe von Schnitten umfassen, die jeweils parallel zueinander verlaufen, wobei jeder Schnitt von der ersten Reihe einen oder mehrere Schnitte von der zweiten Reihe mit einem Winkel überschneidet.

6. Körperprotektorlaminat nach Anspruch 5, wobei der eine oder die mehreren Schnitte eine dritte Reihe von Schnitten umfassen, die jeweils parallel zueinander verlaufen, wobei jeder Schnitt in der dritten Reihe von Schnitten im Wesentlichen eine Reihe kollinearer Überschneidungen der ersten und der zweiten Reihe von Schnitten halbiert.

7. Körperprotektorlaminat nach einem der vorhergehenden Ansprüche, wobei für die oder jede laminierte Schicht der eine oder die mehreren weiteren Schnitte ferner eine erste Reihe von weiteren Schnitten, die jeweils parallel zueinander verlaufen, und die zweite Reihe von weiteren Schnitten umfassen, die jeweils parallel zueinander verlaufen, wobei jeder weitere Schnitt von der ersten Reihe einen oder mehrere weitere Schnitte von der zweiten Reihe mit einem Winkel überschneidet.

8. Körperprotektorlaminat nach Anspruch 7, wobei der eine oder die mehreren weiteren Schnitte eine dritte Reihe von weiteren Schnitten umfassen, die jeweils parallel zueinander verlaufen, wobei jeder Schnitt in der dritten Reihe von weiteren Schnitten im Wesentlichen eine Reihe kollinearer Überschneidungen der ersten und der zweiten Reihe von weiteren Schnitten halbiert.

9. Körperprotektorlaminat nach Anspruch 7 oder Anspruch 8, wenn abhängig von Anspruch 5 oder Anspruch 6, wobei ein gegebenes Paar von benachbarten Schnitten oder weiteren Schnitten, die parallel durch die gleiche Seite einer gegebenen laminierten Schicht verlaufen, durch einen Abstand von im Wesentlichen mindestens zwanzig Millimetern getrennt sind.

10. Körperprotektorlaminat nach einem der Ansprüche 7 bis 9, wenn abhängig von Anspruch 5 oder Anspruch 6, wobei eine gegebene Reihe von parallelen Schnitten von einer entsprechenden Reihe von parallelen weiteren Schnitten versetzt ist und parallel dazu verläuft.

11. Körperprotektorlaminat nach einem der vorhergehenden Ansprüche, wobei ein gegebener Schnitt durch eine Haut einer gegebenen laminierten Schicht einem gegebenen weiteren Schnitt durch die äußere Haut der gleichen laminierten Schicht benachbart ist und parallel dazu ist, wobei der gegebene Schnitt von dem gegebenen weiteren Schnitt durch einen Abstand von im Wesentlichen mindestens zehn Millimetern getrennt ist.

12. Körperprotektorlaminat nach einem der vorhergehenden Ansprüche, wobei eines oder mehrere von Folgendem mehrere Öffnungen aufweisen, die dort hindurch verlaufen: die erste laminierte Schicht, die zweite laminierte Schicht, eine oder mehrere von den zusätzlichen laminierten Schichten.

13. Körperprotektorlaminat nach Anspruch 12, wobei jede Öffnung durch mindestens einen Schnitt und/oder weiteren Schnitt geschnitten wird.

14. Körperprotektor, der eine vordere Körperverkleidung, eine hintere Körperverkleidung und Bänder umfasst, die die vordere und hintere Körperverkleidung verbinden, wobei jede Körperverkleidung mindestens ein Körperprotektorlaminat nach einem der Ansprüche 1 bis 13 umfasst.

15. Körperprotektor nach Anspruch 14, wobei Seitenkörperverkleidungen vorhanden sind, die mit der vorderen und der hinteren Körperverkleidung verbunden sind, wobei jede Seitenkörperverkleidung mindestens ein Körperprotektorlaminat nach einem der Ansprüche 1 bis 13 umfasst.

## Revendications

1. Stratifié pour la protection du corps (10) comprenant une première couche stratifiée possédant des première (12) et deuxième (14) nappes de tissu adhérant à un côté ou l'autre d'un premier noyau interne en mousse (13), une ou plusieurs découpes (16, 18, 20) ayant été pratiquées dans la première nappe (12) et à travers le premier noyau interne en mousse (13), et une ou plusieurs découpes additionnelles (22, 24, 30) ayant été pratiquées dans la deuxième nappe (14) et à travers le premier noyau interne en mousse (13), de façon à permettre le cintrage composé du stratifié (10) pour permettre l'adaptation substantielle sur ou contre un corps présentant des surfaces convexes et concaves.

2. Stratifié pour la protection du corps selon la revendication 1, dans lequel une deuxième couche stratifiée est disposée contre la première couche stratifiée, la deuxième couche stratifiée comprenant des troisième et quatrième nappes de tissu liées sur un côté ou l'autre d'un deuxième noyau interne en mousse, une ou plusieurs découpes ayant été pratiquées dans la troisième nappe et à travers le deuxième noyau interne en mousse, et une ou plusieurs découpes additionnelles ayant été pratiquées dans la quatrième nappe et à travers le deuxième noyau interne en mousse, de façon à permettre le cintrage composé du stratifié, les première et deuxième couches stratifiées étant en contact entre elles, et pouvant glisser l'une contre l'autre.

3. Stratifié pour la protection du corps selon la revendication 2, dans lequel une ou plusieurs couches stratifiées additionnelles sont disposées contre la deuxième couche stratifiée, chaque couche stratifiée additionnelle comprenant des première et deuxième nappes additionnelles de tissu fixées sur chaque côté d'un noyau interne en mousse additionnel, une ou plusieurs découpes ayant été pratiquées dans la première nappe additionnelle et à travers le noyau interne en mousse additionnel, et une ou plusieurs découpes additionnelles ayant été pratiquées dans la deuxième nappe additionnelle et à travers le deuxième noyau interne en mousse additionnel, en permettant d'effectuer un cintrage composé, les première et deuxième couches stratifiées, et couches stratifiées additionnelles, étant en contact entre elles, et pouvant glisser l'une contre l'autre.

4. Stratifié pour la protection du corps selon une quelconque des revendications 1 à 3, dans lequel, pour la ou chaque couche stratifiée, la ou plusieurs découpes et/ou la ou plusieurs découpes additionnelles s'étendant au moins jusqu'à mi-chemin du noyau en mousse interne correspondant.

5. Stratifié pour la protection du corps selon une quelconque des revendications 1 à 4, dans lequel, pour la ou chaque couche stratifiée, la ou plusieurs découpes comprennent une première série de découpes parallèles entre elles, et une deuxième série de découpes étant parallèles entre elles, chaque découpe de la première série croisant une ou plusieurs découpes de la deuxième série, à un certain angle.

6. Stratifié pour la protection du corps selon la revendication 5, dans lequel la ou plusieurs découpes comprennent une troisième série de découpes parallèles entre elles, chaque découpe de la troisième série de découpes sectionnant substantiellement une série d'intersections colinéaires des première et deuxième série de découpes.

7. Stratifié pour la protection du corps selon une quelconque des revendications précédentes, dans lequel, pour la ou chaque couche stratifiée, la ou plusieurs découpes comprennent une première série de découpes additionnelles parallèles entre elles, et une deuxième série de découpes additionnelles parallèles entre elles, chacune des découpes additionnelles de la première série croisant une ou plusieurs découpes additionnelles de la deuxième série, à un certain angle.

8. Stratifié pour la protection du corps selon la revendication 7, dans lequel la ou plusieurs découpes additionnelles comprenant une troisième série de découpes additionnelles coupant substantiellement une série d'intersections colinéaires des première et deuxième séries de découpes additionnelles.

9. Stratifié pour la protection du corps selon la revendication 7 ou la revendication 8, lorsqu'elles sont tributaires de la revendication 5 ou la revendication 6, dans laquelle une certaine paire de découpes adjacentes ou de découpes additionnelles parallèles à travers le même côté d'une certaine couche stratifiée est séparée par une distance égale substantiellement à au moins vingt millimètres.

10. Stratifié pour la protection du corps selon une quelconque des revendications 7 à 9, lorsqu'elles sont tributaires de la revendication 5 ou de la revendication 6, dans laquelle une certaine série de découpes parallèles est décalée et parallèle à une série correspondante de découpes additionnelles parallèles.

11. Stratifié pour la protection du corps selon une quelconque des revendications précédentes, dans lequel une certaine découpe pratiquée dans une nappe d'une couche stratifiée donnée est adjacente et parallèle à une découpe additionnelle donnée à travers l'autre nappe de la même couche stratifiée, la découpe donnée étant séparée de la découpe additionnelle donnée par une distance égale substantiellement à au moins six millimètres.

12. Stratifié pour la protection du corps selon une quelconque des revendications précédentes, dans lequel une ou plusieurs des suivantes possèdent une pluralité d'ouvertures qui les traversent : la première couche stratifiée, la deuxième couche stratifiée, une ou plusieurs couches stratifiées additionnelles.

13. Stratifié pour la protection du corps selon la revendication 12, dans laquelle chaque ouverture est croisée par au moins une découpe et/ou une découpe additionnelle.

14. Stratifié pour la protection du corps comprenant un panneau de corps antérieur, un panneau de corps postérieur, ainsi que des sangles raccordant les panneaux de corps antérieur et postérieur, chaque panneau de corps comprenant au moins un stratifié pour la protection du corps selon une quelconque des revendications 1 à 13.

15. Protection du corps selon la revendication 14, dans laquelle des panneaux de corps latéraux sont raccordés aux panneaux de corps antérieur et postérieur, chaque panneau de corps comprenant au moins un stratifié pour la protection du corps selon une quelconque des revendications 1 à 13.
